# EUROPÄISCHE PATENTANMELDUNG

(11) **EP 1 862 901 A1**
(43) Veröffentlichungstag der Anmeldung: **05.12.2007**
(21) Anmeldenummer: 07013226.1
(22) Anmeldetag: 23.06.2004
(51) Int. Cl.: G06F 9/44

(54) **Eingabe von Programm-Anweisungen bei imperativen Programmiersprachen**

(62) Teilanmeldung aus: 04014708.4
(71) Anmelder: Renner, Peter, 51515 Kürten (DE)
(72) Erfinder: Renner, Peter, 51515 Kürten (DE)
(74) Vertreter: Nau, Walter

(57) **Zusammenfassung**

Es handelt es sich um eine Programmieroberfläche für imperative, prozedurale Sprachen. Eine weitere Voraussetzung ist eine Grafische Benutzeroberfläche (GUI Graphical User Interface). Die Programmieroberfläche zur Eingabe von Programmcode kann auch bei bekannten Programmiersprachen wie Visual Basic, Java, C++ angewendet werden. Bei der Programmieroberfläche müssen die Programmanweisungen nicht mehr eingetippt werden. Ein Sprachensyntax muss nicht eingehalten werden. Ein Befehlssatz muss nicht erlernt werden.

## Beschreibung

Die Erfindung betrifft ein computergestütztes Verfahren zum Erstellen von Programmcode gemäß den Merkmalen des jeweiligen Oberbegriffes der unabhängigen Patentansprüche 1, 2, 10 und 16.

Die Erfindung bezieht sich auf imperative Sprachen. Bei diesem Sprachentyp werden die Programmanweisungen sequentiell abgearbeitet. Es handelt sich ferner um prozedurale Sprachen. Bei den prozeduralen Sprachen werden die Anweisungen in Blöcken (Prozeduren) gekapselt, um unerwünschte Nebenwirkungen der Anweisungsblöcke untereinander zu vermeiden. Weiterhin benutzt die Erfindung Grafische Benutzeroberflächen, die als GUI (Graphical User Interface) bezeichnet werden. Sie ermöglichen eine Interaktion des Benutzers (Mensch-Maschine-Schnittstelle), die auch als Bedien- und Beobachtungsschnittstelle bezeichnet wird.

Bei prozeduralen Sprachen können, wie es bei einer verbreiteten Sprache (Visual Basic) der Fall ist, die Anweisungen einer Prozedur in einer vom System vorgegebenen Anfangs- und Endzeile gekapselt sein, wobei diese Zeilen vom System automatisch erzeugt werden. Dies kann z. B. dadurch geschehen, dass in einem graphischen Objekt einer Visualisierungsoberfläche ein Ereignis (z. B. eine Benutzereingabe) erfolgt, wodurch das Gerippe der Prozedur bestehend aus einer Anfangs- und Endzeile automatisch erzeugt wird.

Das erfindungsgemäße Verfahren kann als Programmieroberfläche zur Eingabe von Programmcode auch bei bekannten Programmiersprachen wie Visual Basic, Java, C++ verwendet werden.

Bei den herkömmlichen Programmiersprachen müssen die Programmzeilen eingetippt werden. Dies ist ein an sich mühseliger Vorgang. Zu dem ist ein Formalismus (Syntax) erforderlich, damit das System den eingegebenen Programmtext korrekt interpretieren kann. Schliesslich muss ein Programmierer den, zur jeweiligen Sprache gehörigen, Befehlssatz erlernen und beherrschen, damit er effizient Programme erstellen kann.

Die Erfindung hat sich die Aufgabe gestellt, diese Nachteile zu beseitigen, indem Programmanweisungen nicht mehr eingetippt werden müssen, ein Sprachensyntax nicht mehr eingehalten und ein Befehlssatz nicht mehr erlernt werden muss.

Diese Aufgabe ist durch die Merkmale der unabhängigen Patentansprüche 1, 2, 10 und 16 gelöst.

Es ist erfindungsgemäß vorgesehen, dass eine Programmanweisung eingefügt wird, die zumindest ein Schlüsselwort umfasst und dass bei Anwahl eines Schlüsselwortes in einer eingefügten Programmanweisung eine Auswahlliste angezeigt wird, welche syntaxfehlerfreie Programmtextabschnitte umfasst, mit denen das Schlüsselwort ersetzbar ist und dass der Vorgang des Ersetzens von Schlüsselwörtern in einer eingefügten Programmanweisung solange fortgesetzt wird, bis alle Schlüsselwörter durch ausführbare Programmanweisungsabschnitte ersetzt sind.

Hierbei ist es zweckmäßig, wenn vom erfindungsgemäßen System auswählbare Programmanweisungen vorgeschlagen werden, welche zumindest ein sogenanntes Schlüsselwort umfassen. Ein solches Schlüsselwort dient als Platzhalter für zumindest ein weiteres Schlüsselwort und/oder zumindest einen Programmanweisungsabschnitt. Diese Schlüsselworte sind als unfertige Teile einer Anweisung anzusehen (Rohanweisung). Sie sind substituierbar durch weitere Schlüsselworte, Anweisung, Variable, Objekte, Eigenschaften von Objekten, Rechenzeichen, logische Operatoren, Formeln und dergleichen. Diese Schlüsselworte werden im Verlauf des erfindungsgemäßen Verfahrens zwingend durch ausführbaren Programmtext ersetzt. Erst wenn alle Schlüsselworte in der Rohanweisung durch ausführbaren Programmtext ersetzt worden sind, ist die Anweisung fertig gestellt.

Für dieses Ersetzen der Schlüsselworte wird erfindungsgemäß ein besonders vorteilhaftes Verfahren mit Hilfe von Auswahllisten durchgeführt, wobei jedem Schlüsselwort eine derartige Auswahlliste im erfindungsgemäßen System zugeordnet ist. Eine solche Auswahlliste weist mehrere Ersatztexte auf, mit welchen das Schlüsselwort ersetzbar ist, wobei ein solcher Ersatztext insbesondere einen abarbeitbaren Programmtext wie die obenstehend angegebenen oder auch ein weiteres Schlüsselwort umfasst. Erfindungsgemäß wird verfahrensseitig bei Anwahl eines solchen Schlüsselwortes in der eingefügten Rohanweisung die zugeordnete Auswahlliste angezeigt, aus welcher der Anwender eine passende Position auswählt. Vorteilhafterweise kann dieser Vorgang des Ersetzens von Schlüsselwörtern in einer eingefügten virtuellen Programmanweisung solange fortgesetzt werden, bis alle Schlüsselwörter durch einen ausführbaren Programmanweisungsabschnitt ersetzt sind. Mit diesem erfindungsgemäßen Verfahren zur Erstellung eines Programmcodes wird jeder in die Lage versetzt, ohne besondere Vorbildung rechnergestützt ein Computerprogramm zu erzeugen, da die Inhalte der einzelnen Listenpunkte der jeweiligen Auswahlliste so gestaltet sind, das sie, wenn sie das Schlüsselwort ersetzen, einen syntaxfehlerfreien Programmcode erzeugen.

In Weiterbildung der Erfindung ist vorgesehen, dass nur zwei Programmanweisungskategorien zur Auswahl bei der Einfügung einer Programmanweisung bereitgestellt werden, insbesondere die Anweisungskategorien Abfrage und Aktion. Dies erleichtert wiederum das computergestützte Führen des Anwenders bei der Erstellung des Programmcodes. Dieser muss letztlich nur die Entscheidung treffen, ob bei der entsprechenden Programmanweisung eine Information benötigt wird (Abfrage) oder ob ein Befehl auszuführen ist (Aktion). Es versteht sich wiederum, dass die Bezeichnung der Anweisungskategorien "Abfrage" beziehungsweise "Aktion" mit einer beliebigen anderen Bezeichnung austauschbar ist. In jedem Fall wird jedoch in der einen Kategorie eine Information eingeholt und in der anderen Programmanweisungskategorie ein Befehl ausgeführt. Darüber hinaus ist es auch möglich, sogenannte Infozeilen beziehungsweise Kommentare einzufügen, die jedoch für den Programmablauf unrelevant sind.

Es ist zweckmäßig, wenn mit der Abfrageanweisung Zustände wie Bedienerhandlungen, Eingabeparameter, Datenbankabfragen sowie Zustände externer Einrichtungen und Sensorwerte ermittelt werden. Beispielsweise kann abgefragt werden, ob eine Temperatur einen vorgegebenen Wert überschritten hat, ob ein Behälter gefüllt ist, ein Aggregat eingeschaltet ist oder ob eine Taste betätigt wurde. Letztlich kann mit der Abfrageanweisung ein beliebiger Zustand oder Wert erfasst werden. Es ist zweckmäßig, wenn die Abfrageanweisung die grundlegende Struktur "wenn (logische Operation) dann" aufweist, wobei ähnliche Abfrageanweisungen wie "wenn nicht (logische Operation) dann", "wenn dann", "wenn (logische Operation) dann wiederhole" auch möglich sind.

Vorteilhafterweise ermöglicht eine Aktionsanweisung, d.h. ein Befehl eine beliebige Operation, insbesondere eine Prozesssteuerung, eine Darstellung für Information für das Bedienpersonal, die Speicherung von Daten (Dokumentation), mathematische Operationen (beispielsweise Berechnen von Formeln), programmtechnische Operationen wie beispielsweise Schleifen, Aufrufe etc.

Wie der Fachmann erkennt, impliziert eine Abfrageanweisung mit "wenn (logische Operation) dann" Aktionsanweisungen. Nur wenn die Abfrage mit logisch 1, d.h. wahr beantwortet wird, erfolgt die angegebene Aktion. In jedem Fall wird dem Nutzer des erfindungsgemäßen Systems nur die Möglichkeit gegeben, entweder eine Aktionsanweisung oder eine Abfrageanweisung für die Einfügung von Programmanweisungen in eine Prozedur auszuwählen. Möchte der Anwender eine neue Programmanweisung hinzufügen, werden automatisch die Anweisungskategorien Abfrage und Aktion in einer Auswahlliste angezeigt. Durch Auswahl einer dieser beiden Kategorien wird die entsprechende Programmanweisung eingefügt. Dabei ist es zweckmäßig, wenn die eingefügte Anweisung in Form einer Rohanweisung, die noch keine fertige Anweisung darstellt, eingefügt wird, wobei diese Rohanweisung durch weitere Schritte zu einer fertigen, durch das System ausführbare Anweisung, ergänzt wird. Dabei kann es zweckmäßig sein, wenn über mehrere Auswahlverfahren bestimmte Teile der Rohanweisung ersetzt werden, sodass sich letztlich die ausführbare Programmanweisung, insbesondere in einer vorgegebenen Hochsprache ergibt. Wesentlich ist dabei, dass der Anwender vom erfindungsgemäßen System "zwangsgeführt wird", sodass letztlich Syntaxfehler ausgeschlossen sind.

In Weiterbildung kann es vorteilhaft sein, wenn die Schlüsselworte in der virtuellen Programmanweisung deutlich hervorgehoben sind, z.B. durch Unterstreichen oder eine farbige Kennzeichnung.

Besonders zweckmäßig kann es sein, wenn die Auswahllisten auch Programmanweisungen wie Zuweisungen, Schleifen oder Aufrufe umfassen, sodass letztlich das gesamte Programmierhandwerkzeug rechnergestützt und situationsabhängig dem Anwender bereitgestellt werden kann.

Letztlich ist es mit der Erfindung für den Anwender unnötig, eine Programmiersprache zu erlernen um einen Programmcode zu erstellen, der auf einem Computer ausführbar ist.

Bei dem erfindungsgemäßen Verfahren beziehungsweise dem erfindungsgemäßen System sind Fehlermeldungen bei der Erstellung des Programmcodes beziehungsweise deren Kompilierung, wie sie nach dem Stand der Technik erforderlich sind, entbehrlich. Dagegen kann es jedoch vorteilhaft sein, wenn eine Fehlermeldung in solchen Situationen angezeigt wird, in denen versucht wird, den Programmcode ablaufen zu lassen, obwohl zumindest eines der Schlüsselwörter in einem der Programmabschnitte eines Programmbausteins noch nicht wie beschrieben ersetzt worden ist.

Darüber hinaus ist es erfindungsgemäß, wenn durch den Anwender angelegte Objekte, insbesondere Visualisierungsobjekte, Parameterobjekte, Variablen, im Strukturschaubild angelegte Programmbausteine etc. automatisch in die jeweiligen Auswahllisten mit ihren individuellen Bezeichnern aufgenommen werden. Auf diese Weise ist sichergestellt, dass alle möglichen Programmtextabschnitte, mit welchen ein Schlüsselwort ersetzt werden kann, auch in der jeweiligen Auswahlliste angezeigt wird. Da zweckmäßigerweise auch Programmbefehle wie Zuweisungen, Schleifen, Aufrufe in den Auswahllisten enthalten sein können, hängt der Umfang der Auswahllisten von der Mächtigkeit der verwendeten Sprache und der Anzahl der vom Anwender angelegten Objekte ab.

Darüber hinaus kann es zweckmäßig sein besonders bei graphischen Objekten, wenn im erfindungsgemäßen System die Möglichkeit besteht, festzulegen, welche Eigenschaften von Objekten in den Auswahllisten aufgenommen werden. Auf diese Weise kann der Umfang von bestimmten Auswahllisten, die Objekteigenschaften beinhalten, beschränkt werden. Solche Eigenschaften können das Aussehen der graphischen Objekte zum Gegenstand haben.

Darüber hinaus kann jedoch vorteilhaft auch ein Expertenmodus vorgesehen sein, welchem Auswahllisten bereitgestellt werden, die Zugriff auf alle Eigenschaften durch das zu erstellende Programm ermöglichen. Im Normalmodus wird dagegen der Zugriff auf die wichtigen Eigenschaften per Voreinstellung bereitgestellt. Diese Voreinstellungen kann der Anwender im erfindungsgemäßen System verändern und somit seinen individuellen Wünschen und Fähigkeiten anpassen.

Wie der Fachmann erkennt, kann das erfindungsgemäße System zum computergestützten Erstellen von Programmcode schon durch eine Ausführungsumgebung bereitgestellt werden, welche ein Eingabemittel wie eine Tastatur und/oder eine Computermaus, ein Darstellungsmittel wie ein Monitor sowie ein Datenverarbeitungsmittel wie eine Prozessoreinrichtung sowie ein Speichenmittel umfasst, in welches ein Softwarecode geladen werden kann, mit dem ein erfindungsgemäßes Verfahren ausführbar ist. Ein herkömmlicher PC ist als Hardware für die Durchführung des erfindungsgemäßen Verfahrens vollkommen ausreichend.

Wie der Fachmann darüber hinaus erkennt, besteht die Erfindung aus mehreren grundlegenden Erfindungsgedanken, die auch unabhängig voneinander zu sehen sind:
- dem computergestützten Bereitstellung von Programmanweisungen von nur zwei Kategorien (Abfrage/Aktion), wodurch eine computergestützte Methode bereitgestellt wird, welche die Umsetzung der Programmieraufgabe in den Programmcode erleichtert,
- ein spezielles, computergestütztes Verfahren um Programmanweisungen zu erstellen, ohne dass der jeweilige Programmcode vom Anwender eingetippt werden muss.

Die Erfindung wird im Folgenden durch das Beschreiben einer Ausführungsform unter Bezugnahme auf die beiliegenden Zeichnungen beschrieben, wobei
- Fig. 1: ein schematischer Aufbau als Datenflussdiagramm eines erfindungsgemäßen Programmiersystems,
- Fig. 2: Programmbausteinsymbole eines Strukturschaubildes,
- Fig. 3: beispielhafte, jeweils ein Ablaufdiagramm darstellende Symbole,
- Fig. 4: ein Beispiel eines Ablaufs, der durch einen Ereignisbaustein gestartet wird,
- Fig. 5a: einen Ausschnitt eines Visualisierungsschaubildes mit der Ausgabe "Bild A",
- Fig. 5b: den gleichen Ausschnitt des Visualisierungsschaubildes mit der Ausgabe "Bild B",
- Fig. 5c: dem gemäß der Erfindung erstellten Programmcode zur Anzeige der Bilder "Bild A" und "Bild B", und
- Fig. 6a, b: beispielhaft die Erstellung einer Abfrageanweisung ohne die Notwendigkeit zum Eintippen einer Programmanweisung
zeigt.

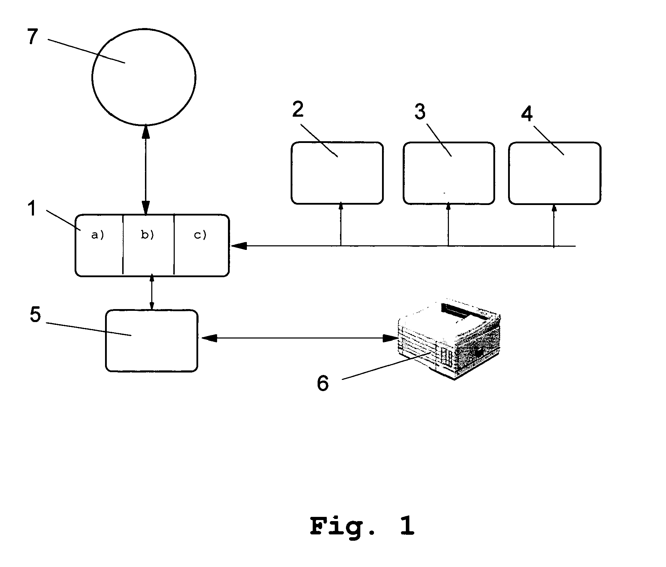

Fig. 1 zeigt in einer Prinzipskizze ein erfindungsgemäßes System mit einer Ausführungsumgebung zum computergestützten Erstellen und Abarbeiten von Programmcode. Diese umfasst einen PC 1, welcher ein Datenverarbeitungsmittel 1a in Form einer CPU, Speichermittel 1b zum Speichern von Softwarecode für die Durchführung des erfindungsgemäßen Verfahrens, zum Speichern einer Datenbank während der Ausführung des Verfahrens sowie zum Speichern des computergestützt erstellten Programmcodes und Eingabemittel 1 c in Form einer Tastatur und Computermaus aufweist. Der PC 1 ist ferner an Anzeigemittel in Form von Bildschirmen 2, 3, 4 angeschlossen, auf welchen ein Visualisierungsschaubild, ein Parameterschaubild sowie ein Strukturschaubild dargestellt sind. Darüber hinaus weist der PC 1 eine Umweltschnittstelle 7 auf, mit der das System nach außen kommunizieren kann. Ferner ist der Rechner über eine Schnittstelle 5 mit einem Drucker 6 verbunden.

Das Parameterschaubild 2 dient zur Anzeige von über die Tastatur 1 c eingegebenen Parameter. Somit können Daten eingegeben werden, die den nachfolgenden Programmablauf beeinflussen. Auf diese Weise können auch Daten für einen späteren Durchlauf angegeben werden, wenn ein erstelltes Programm gerade abläuft. Somit können Parameterdateien für spätere Programmabläufe vorgesehen werden. Das Visualisierungsschaubild 3 dient einerseits zum Erstellen von Objekten während der Programmerstellung und ferner zum Beobachten der Objekte während der erstellte Programmcode abläuft. Das Strukturschaubild 4 dient im wesentlichen zum Strukturieren der Programmieraufgabe während der Erstellung des Programmcodes. Läuft der erstellte Programmcode ab, kann im Laufzeitmodus über eine Markierung von Programmbausteinen bzw. von deren Symbolen angezeigt werden, welche Programmbausteine beziehungsweise welcher Programmbaustein gerade abgearbeitet wird.

Während der Laufzeit ist dem Anwender der Zugang zum erstellten Programmcode, der auch im Speicher 1 b abgelegt ist, verwehrt. Dieser kann im Entwicklungsmodus über die Bildschirme 2, 3 bearbeitet werden. Die Druckerschnittstelle 5 beinhaltet auch eine Konfiguration der Datenausgabe in Form von Formularen, die vom Drucker 6 ausgegeben werden. In der angegebenen Ausführungsform weist das System eine Umweltschnittstelle zur Verbindung mit Sensoren auf, mit denen Messdaten erfasst werden können. Darüber hinaus können über diese Schnittstelle Steuersignale ausgegeben werden, die externe Vorgänge steuern.

Der Anwender kann mittels des in Fig. 1 angegebenen Systems im Strukturschaubild 4 computerunterstützt verschiedene Typen von Programmbausteinen auswählen, die dann im Strukturschaubild angezeigt werden. Diese Programmbausteine werden als Symbole dargestellt und können im Strukturschaubild auf die Oberfläche gezogen und angeordnet werden. Sie werden dann vom System automatisch mit vorgegebenen Regeln über Linien verbunden, wodurch das Gerüst des zu erstellenden Programms festgelegt ist. Letztlich kann mit dieser computergestützten Anordnung von Programmbausteinen jedes beliebige Programm erzeugt werden. Durch Anwahl des jeweiligen Bausteins bzw. des Symbols wird der Zugang zu dem Programmcodeabschnitt des Bausteins ermöglicht.

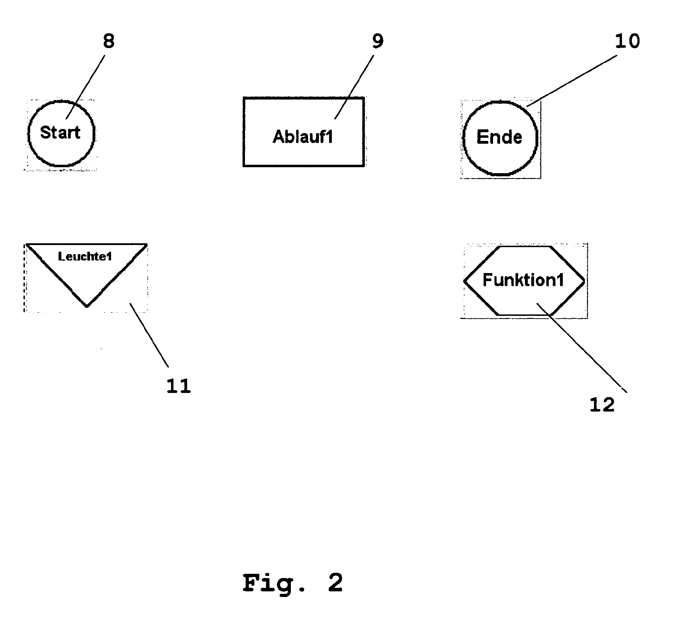

Fig. 2 zeigt mehrere, jeweils einen Programmbaustein darstellende Symbole, wie sie in einem Strukturschaubild verwendet werden. Der Bausteinkategorie Ablauf gehören die Typen Ablaufbaustein 9, Ereignisbaustein 11, Startbaustein 8 und Endbaustein 10 an. Abläufe werden vom System seriell verknüpft, wodurch ihre Arbeitsweise chronologisch ist. Somit kann zu einem gegebenen Zeitpunkt immer nur ein Baustein der Kategorie Ablauf aktiv sein. Abläufe ermöglichen bedingte Verzweigungen.

In der Figur ist daneben auch ein Bausteintyp Funktionsbaustein bzw. dessen Symbol 12 gezeigt, welcher der Bausteinkategorie Funktion angehört. Funktionen erledigen Aufgaben, die gleichzeitig, d.h. parallel zu Abläufen ausgeführt werden.

Programmbausteine können im erfindungsgemäßen Programmiersystem nach vorgegebenen Regeln verknüpft werden. Der Startbaustein 8 ruft beispielsweise einen anderen Bausteintyp der Kategorie Ablauf außer dem Ereignisbaustein 11 auf. Dies kann ein Ablaufbaustein 9 oder ein Endbaustein 10 sein. Darüber hinaus kann der Startbaustein 8 auch einen Funktionsbaustein 12 aufrufen.

Der Ereignisbaustein 11 wird durch Ereignisse, die im Programmverlauf eintreten können, aufgerufen und kann seinerseits einen Ablaufbaustein 9, einen Endbaustein 10 oder einen Funktionsbaustein 12 aufrufen.

Der Start eines Ablaufs kann daher durch einen Startbaustein 8 oder einen Ereignisbaustein 11 erfolgen. Ein Ereignis, das den Start eines Ablaufs auslöst, kann beispielsweise die Anwahl eines Bedienobjektes in einem Visualisierungsschaubild sein.

Die implementierten Verknüpfungsregeln legen ferner fest, dass der Ablaufbaustein 9 entweder von einem Startbaustein 8, einem Ereignisbaustein 11 oder einem Ablaufbaustein 9 aufgerufen wird und seinerseits einen Ablaufbaustein 9, einen Endbaustein 10 oder einen Funktionsbaustein 12 aufrufen kann. Darüber hinaus sind in Abläufen bedingte Verzweigungen möglich.

Die Verknüpfungsregeln der beschriebenen Ausführungsform besagen ferner, dass der Endbaustein 10 den Abschluss eines Ablaufs bildet. Dieser wird entweder von einem Startbaustein 8, einem Ereignisbaustein 11 oder einem Ablaufbaustein 9 aufgerufen. Er kann seinerseits einen Funktionsbaustein 12 aufrufen.

Dieser Funktionsbaustein 12 arbeitet parallel zu Abläufen. Er wird entweder von einem Startbaustein 8, einem Ereignisbaustein 11, einem Ablaufbaustein 9 oder einem Endbaustein 10 aufgerufen. Der Funktionsbaustein 12 selbst kann keinen Programmbaustein aufrufen.

Dem Anwender werden vom System nur die genannten Programmbausteine zur Auswahl angeboten, die sich in die Kategorien Ablauf und Funktion aufteilen lassen. Diese ausgewählten Programmbausteine werden dann wie in Fig. 2 angegeben mittels zugeordneter Symbole, welche unter Umständen vom Anwender mit einem Bezeichner wie einem Namen versehen werden können, im Strukturschaubild angezeigt.

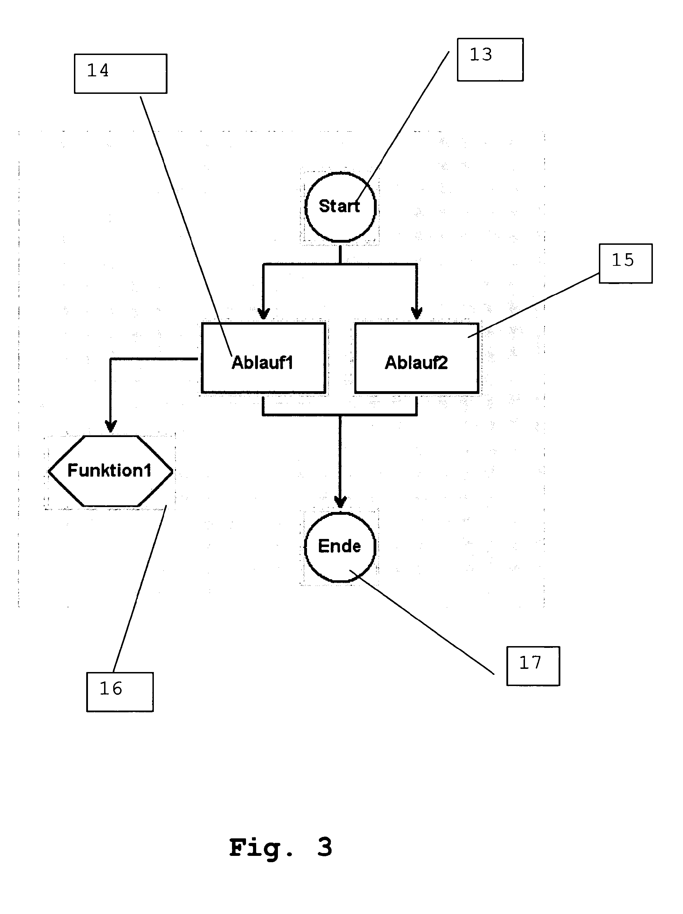

Fig. 3 zeigt nun ein Strukturschaubild, in welchem das System automatisch die Programmbausteine mittels Linien miteinander verbunden hat, wodurch der Programmverlauf und die Programmstruktur verdeutlicht ist. Immer wenn ein weiteres, einen Programmbaustein darstellendes Symbol vom Anwender auf dem Strukturschaubild angelegt wird, erfolgt je nach Typ des neuen Bausteins automatisch die Anordnung diesen Symbols und die Verbindung zu dem aufrufenden Symbol nach den vorgegebenen Regeln durch das erfindungsgemäße System. Die gezeigten Symbole 13 bis 17 dienen der Darstellung von zugeordneten Programmbausteinen.

Entsprechend den obenstehend angegebenen Regeln zum Verknüpfen der Programmbausteine werden die Symbole 13 bis 17 durch das System angeordnet und automatisch mit Linien verbunden, sodass der Programmablauf und die Programmstrukturwiedergegeben ist. Die Pfeile in den Verbindungslinien zwischen den Symbolen verdeutlichen den Programmablauf. Die Programmstruktur wird da-rüber hinaus durch die grundsätzlich vertikale Anordnung der seriell verknüpften Ablaufbausteine 13, 14, 15 und 17 dargestellt, während der parallel arbeitende Funktionsbaustein 16 zum aufrufenden Ablaufbaustein Ablauf 1 horizontal angeordnet ist.

Die Verbindungslinien zu dem Funktionsbaustein 16 weist einen grundsätzlich horizontalen Verlauf auf, wobei ein vertikaler Versatz aufgrund der Anordnung der Symbole notwendig ist. Die Verbindungslinien zwischen dem Startbaustein 13 und den beiden Ablaufbausteinen 14, 15 weisen einen grundsätzlich vertikalen Verlauf auf, wobei ein horizontaler Versatz aufgrund der Anordnung der Symbole notwendig ist.

Die Symbole des Strukturschaubildes in Fig. 3 dienen als virtuelle Container für den jeweiligen Programmcodeabschnitt. Der Zugang zu dem Programmcodeabschnitt erfolgt durch Anklicken der Symbole. Es öffnet sich daraufhin ein Fenster, in welchem der Programmcodeabschnitt bearbeitet werden kann.

Das erfindungsgemäße System stellt in der beschriebenen Ausführungsform einen Entwicklungsmodus und einen Laufzeitmodus zur Verfügung, wobei in Letzterem der erstellte Programmcode abgearbeitet wird. Beim Start des Programms wird entsprechend der Darstellung in Fig. 3 zuerst der Programmcodeabschnitt abgearbeitet, welcher dem Symbol 13 des Startbausteins zugehörig ist. Der Startbaustein 13 kann entweder den Ablaufbaustein "Ablauf 1" 14 oder den Ablaufbaustein "Ablauf 2" 15 aufrufen. Hierfür ist im Programmcodeabschnitt des Startbausteins 13 eine bedingte Verzweigung vorgesehen, die dafür sorgt, dass entweder der Ablaufbaustein 14 oder der Ablaufbaustein 15 aufgerufen wird.

Wie in Fig. 3 dargestellt, ruft der Ablaufbaustein 14 bedingt oder unbedingt den Funktionsbaustein 16 auf. Dessen Programmcodeabschnitt wird parallel zu dem Ablauf, bestehend aus den Programmbausteinen 13, (14; 15) und 17 abgearbeitet.

Der Funktionsbaustein 16 unterscheidet sich von den in herkömmlichen Programmiersprachen bekannten Subprozeduren. Derartige Subprozeduren unterbrechen den Programmablauf. Dagegen wird der Funktionsbaustein 16 parallel zu dem aufrufenden Programmteil abgearbeitet und stellt damit ein neuartiges Element dar. Dieser Funktionsbaustein kann vorteilhaft bei zeitaufwendigem Vorgängen genutzt werden, die dann parallel ablaufen können. Je nach Anwendung kann dabei der aufrufende Programmbaustein mit dem aufgerufenen Programmbaustein Daten austauschen.

Die Ablaufbausteine 14, 15 rufen jeweils unbedingt den Endbaustein 17 auf. Hier erfolgt keine Bedingungsabfrage, da der Programmverlauf entweder über den Ablaufbaustein 14 oder den Ablaufbaustein 15 erfolgt. Im Endbaustein 17 können Programmteile abgelegt sein, die vor Abschluss des Programms ausgeführt werden müssen. In einer besonderen Ausführungsform ist im Endbaustein vorgesehen, die Ergebnisse zu speichern und Ausdrucke zu erzeugen (siehe Fig. 1).

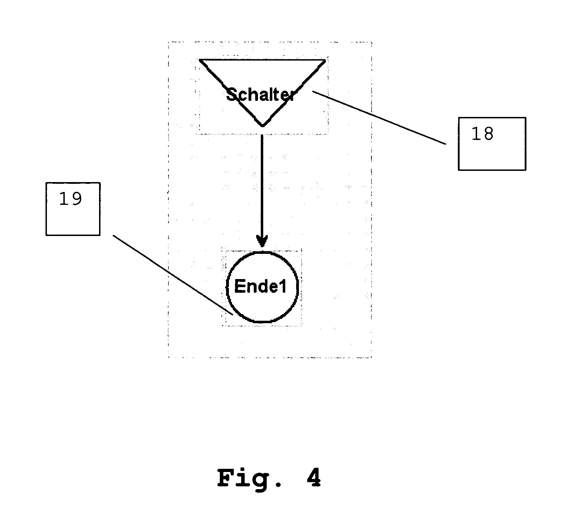

Fig. 4 zeigt ein Strukturschaubild mit einem Ereignisbaustein 18, der durch einen Endbaustein 19 abgeschlossen ist. Der Ereignisbaustein 18 wird durch Ereignisse, die im Programmablauf eintreten können, aufgerufen und kann seinerseits einen Ablaufbaustein, einen Endbaustein oder einen Funktionsbaustein aufrufen. Solche Ereignisse können z.B. Bedienhandlungen sein, die durch Anklicken auf Visualisierungsobjekte in Visualisierungsschaubildern ausgelöst werden. Derartige Ereignisse können während der Laufzeit des erstellten Programms jederzeit auftreten.

Der Ereignisbaustein 18 startet einen Ablauf, welcher sich nur durch die Art des Startes von einem Ablauf gemäß Fig. 3 unterscheidet. Während ein in Fig. 3 dargestellter Ablauf in einer Anwendung nur einmal auftreten kann, können Abläufe entsprechend Fig. 4 in beliebiger Anzahl auftreten, die parallel ausgeführt werden. Diese Abläufe gemäß Fig. 4, welche durch das Ereignismodul 18 gestartet werden, arbeiten unabhängig voneinander und auch unabhängig von einem Ablauf gemäß Fig. 3, der durch einen Startbaustein 13 gestartet wird. Hierdurch verdeutlicht sich auch der Unterschied zum Funktionsbaustein 16. Dieser arbeitet zwar auch parallel zu einem Ablauf, wird jedoch von einem Programmbaustein des Typs Ablauf über einen Datenkanal aufgerufen und ist somit diesem Ablauf zugehörig.

Der Ereignisbaustein 18 ist wie in Fig. 4 dargestellt seriell mit dem Endbaustein 19 verbunden, wobei wiederum diese Verbindung durch das System automatisch erzeugt wird. In beiden Bausteinen kann ein beliebiger Programmcodeabschnitt untergebracht werden, der ausgeführt wird, wenn das den Ablauf auslösende Ereignis auftritt.

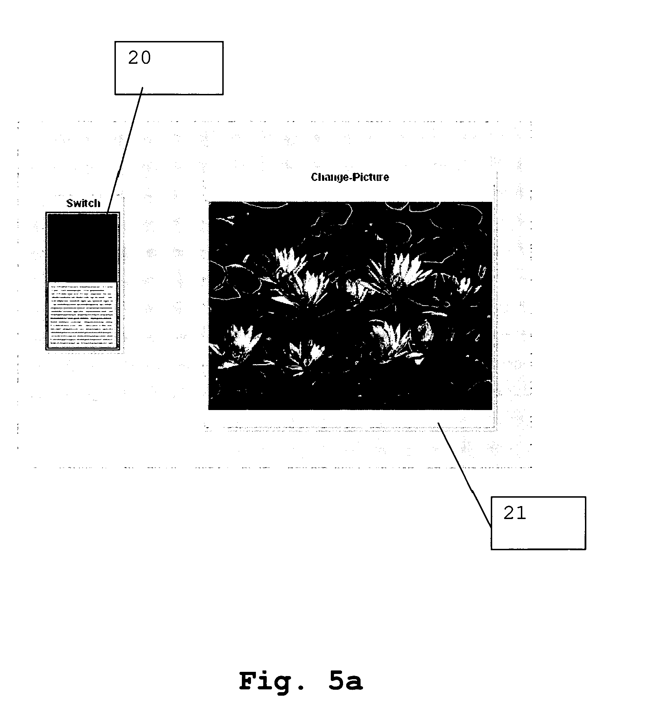

In den Figuren. 5a bis 5c ist die erfindungsgemäße Anlegung von Objekten und der entsprechende Programmcodeabschnitt eines Ereignisbausteins dargestellt, in welchem die erzeugten Objekte verwendet werden. Eine Ereignisprozedur wird jedes Mal aufgerufen, wenn ein Ereignis eintritt z. B. durch eine Bedienerhandlung via eines graphischen Objektes des graphischen Benutzerinterfaces (GUI).

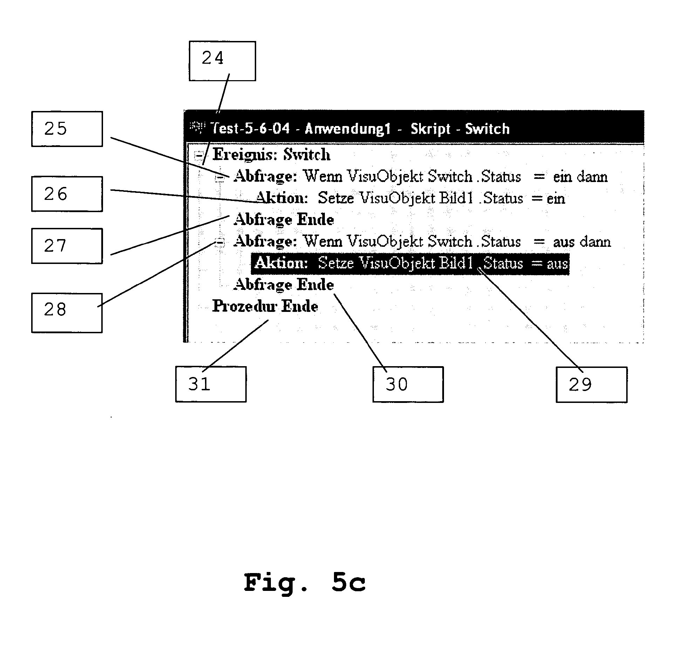

Zunächst sei auf Fig. 5a verwiesen, die einen Visualisierungsbildschirm mit einem Schalterobjekt 20 und dem individuellen Namen "Switch" in einer Schalterstellung "One" zeigt. Darüber hinaus ist ein Bildobjekt 21 dargestellt mit dem individuellen Namen "Change-Picture" aus der Ausgabe eines von zwei Bildern. Ein solches Visualisierungsschaubild dient zum Bedienen und Beobachten bei der Abarbeitung des erstellten Programms. Dagegen sind in der Fig. 5c die Programmanweisungen angegeben, die den gewünschten Programmverlauf erzeugen.

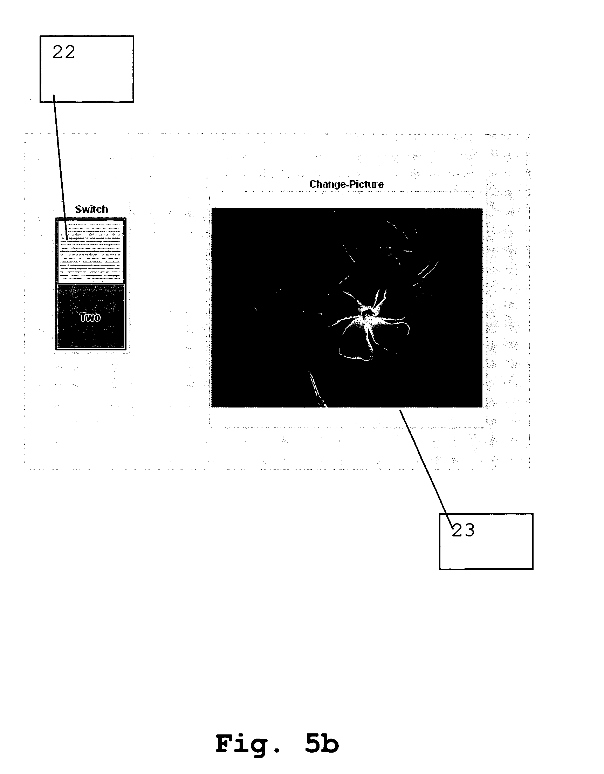

Die Abbildungen 5a und 5b stellen die gleichen Visualisierungsobjekte dar. In Abbildung 5a ist der Schalter 20 mit dem individuellen Namen "Switch" in der Stellung "One", während in Abbildung 5b der gleiche Schalter 22 in der Stellung "Two" steht. Den jeweiligen Schalterstellungen ist ein Bildobjekt 21 beziehungsweise 23 zugeordnet. Abhängig von der Schalterstellung 20, 22 erscheint entweder das Bild entsprechend 21 oder das Bild entsprechend 23. Das Bildobjekt kann somit aufgrund seiner Definition zwei unterschiedliche Bilder darstellen.

Die Aufgabe des Programmablaufs gemäß Fig. 5c besteht darin, beim Betätigen des Schalters 20, 22 von einer der beiden Stellungen "One" oder "Two" in die jeweils andere, das Bild des Bildobjektes 21, 23 von "Bild A" 21 nach "Bild B" 23 zu wechseln und umgekehrt. Demnach ist die Stellung "One" dem Bild 21, und der Stellung "Two" das Bild 23 zugeordnet.

Jedes Mal, wenn der Schalter 20, 22 betätigt wird, wird ein Ereignis ausgelöst, das die Prozedur Fig. 5c aufruft, sodass die Anweisungen der Prozedur 5c abgearbeitet werden.

Diesem Ablauf entspricht im Strukturschaubild ein Ereignisprogrammbaustein, wie er in Fig. 4 mit dem Symbol 18 dargestellt ist. Fig. 5c stellt den Programmcodeabschnitt dar, welcher diesem Ereignisprogrammbaustein entspricht. Wie obenstehend schon erläutert, kann der Anwender im Entwicklungsmodus durch Anwählen des Programmbausteins 18 dessen Programmcodeabschnitt öffnen. Der sich dann öffnende Programmcodeabschnitt ist nach dessen Erweiterung in Fig. 5c dargestellt. Mit dem Anlegen des Ablaufs im Strukturschaubild werden die Zeilen 24 und 31 automatisch angelegt. Diese kennzeichnen den Anweisungstyp Ereignis und den Namen "Switch" des Ablaufs. Vom System wird automatisch der Name des korrespondierenden Objektes 20, 22 auf der Visualisierungsoberfläche verwendet, sodass der Anwender hier keine weitere Eingabe durchführen muss.

Der Anwender kann nun rechnergestützt zusätzliche Programmanweisungen hinzufügen, welche entweder Anweisungen der Kategorie Abfrage oder der Kategorie Aktion sind. Auf die Art und Weise der Hinzufügung wird weiter untenstehend eingegangen.

Aufgrund der Vorgabe sind die hinzugefügten Programmanweisungen 25 bis 30 entweder Abfrage- oder Aktionsanweisungen. Die Abfrageanweisungen 25, 27 beziehungsweise 28, 30 sind sogenannte Blockanweisungen, welche aus zwei Zeilen bestehen. Sie schließen in der Regel weitere Anweisungen ein, wobei ein logischer Bezug zwischen den Blockanweisungen und den in der Blockanweisung eingeschlossenen Anweisungen besteht.

Der in Fig. 5c dargestellte Ereignisbaustein in Form seiner Programmanweisung ist mit dem Visualisierungsobjekt "Switch" 20, 22 verknüpft, wobei das Ereignis ausgelöst wird, wenn der Schalter 20, 22 umgelegt wird. Dieser Programmverlauf wird durch den Anwender in der Visualisierungsoberfläche durch Betätigen des Schalters gestartet.

Im Einzelnen stellen die Zeilen 25, 26 und 27 einen Anweisungsblock dar, wobei die Zeile 25 eine Wenn ... dann -Anweisung ist. Sie bedeutet, dass die Aktionsanweisung 26 ausgeführt wird, wenn sich der Schalter in der Stellung "21" befindet. Diese setzt dann das Visualisierungsobjekt 21, 23 auf den Status "ein", was dem Bild 21 entspricht. Insofern wird bei der Betätigung des Schalters in die Stellung "ein" das Bild 21 dargestellt.

In gleicher Weise stellen die Zeilen 28, 29 und 30 ebenfalls einen Anweisungsblock dar, wobei die Wenn ... dann -Anweisung in Zeile 28 verursacht, dass die Aktionsanweisung 29 ausgeführt wird, wenn der Schalter sich in der Stellung 22, d.h. in der Stellung "aus" befindet. Mit der Aktionsanweisung 28 wird das Visualisierungsobjekt 21, 23 auf den Status "aus" gesetzt, welcher dem Bild 23 zugeordnet ist. Insofern wird das Bild 23 dargestellt, wenn sich der Schalter in der Stellung "aus" befindet.

Der angegebene und mit dem erfindungsgemäßen System erzeugte Programmcode verursacht, dass bei jedem Umlegen des Schalters im Visualisierungsschaubild die Abarbeitung des in Fig. 5c dargestellten Programmcodes gestartet wird, wodurch das Visualisierungsobjekt 21, 23 das Bild wechselt.

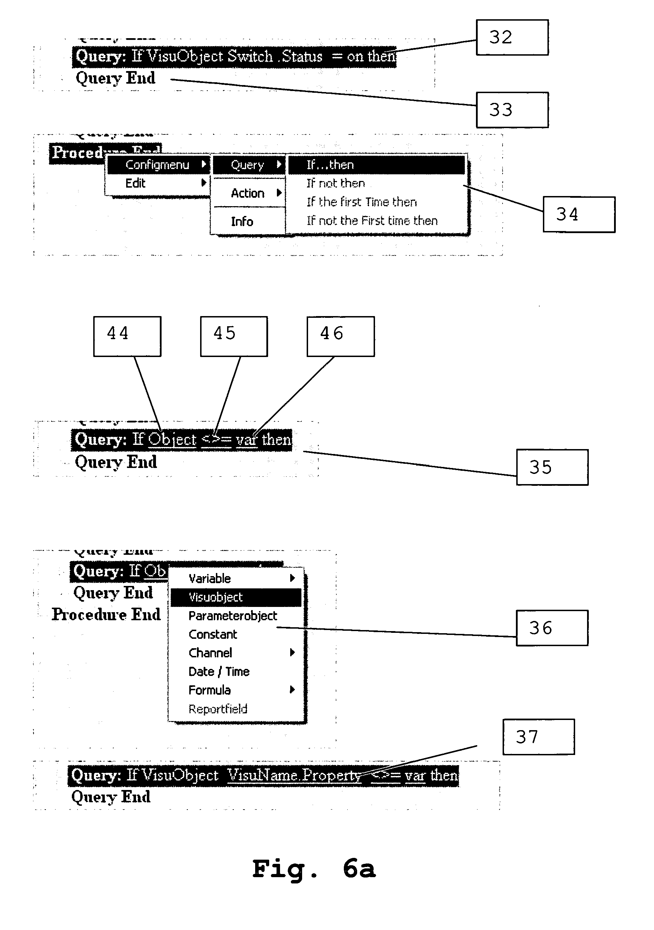

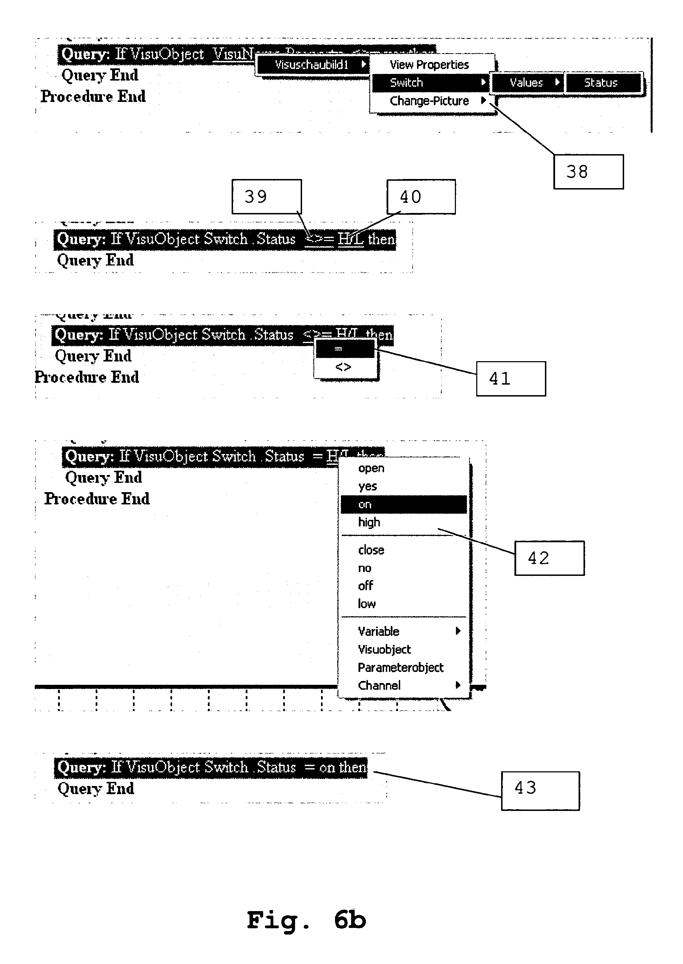

Mit Bezug auf die Fig. 6a, b wird im Folgenden das erfindungsgemäße Einfügen einer Programmzeile in einen Programmbaustein mit Hilfe von Schlüsselwörtern und korrespondierenden Auswahllisten gezeigt. Hierdurch wird der Anwender in die Lage versetzt, Programmcode zu erzeugen, ohne dass dieser eine einzige Zeile selbst eintippen muss. Die Auswahllisten umfassen je nach Ausführungsform weitere Schlüsselworte, Programmanweisungen, Variable, Objekte, Eigenschaften von Objekten, Rechenzeichen und/oder logische Operatoren. Die Zeilen 32 und 33 zeigen die fertige Anweisung, deren Erstellung im Folgenden erläutert wird, siehe Fig. 6a. Ziel ist demnach die Erzeugung einer If ... then-, d.h. einer Wenn ... dann-Blockanweisung. Diese Anweisung drückt aus, dass Aktionsanweisungen, welche zwischen den Zeilen 32 und 33 eingefügt werden können nur ausgeführt werden, wenn das Ergebnis der logischen Operation in der Wenn ... dann-Blockanweisung wahr ist.

Der erste Schritt bei der Einfügung einer neuen Anweisung ist mit der Anzeige einer Auswahlliste 34 verbunden, die als Kontextmenü gestaltet ist. Wie zu erkennen, bietet das System zur Einfügung entweder eine Abfrage oder eine Aktion als die beiden möglichen Kategorien von Anweisungen an. Vorliegend ist die Abfrageanweisung ausgewählt, insofern wird automatisch die Auswahlliste 34 für die Abfrageanweisung angezeigt. Der Anwender kann nun über die Maus eine der angezeigten Abfrageanweisungen in der Auswahlliste 34 auswählen und mit einem Klick bestätigen. Als Reaktion darauf darauf wird vom System die neue Zeile 35 eingefügt, die als Rohkörper einer Wenn ... dann-Anweisung bezeichnet werden kann. Die Zeile 35 weist drei Schlüsselworte auf, die zur Kennzeichnung unterstrichen sind und der Reihe nach durch ausführbaren Programmtext, Programmtextabschnitte oder weitere Schlüsselworte ersetzt werden müssen.

Insofern wird vom Anwender zuerst das Schlüsselwort "Object" der Zeile 35 durch Anklicken angewählt, worauf sich die Auswahlliste 36 des Schlüsselwortes "Object" öffnet.

Diese Auswahlliste 36 stellt alle möglichen Programmtexte beziehungsweise Programmtextabschnitte oder Schlüsselworte dar, mit denen das ausgewählte Schlüsselwort "Object" ersetzt werden kann. Vorliegend wird in der Auswahlliste die Zeile "Visuobject" ausgewählt, wodurch der Zugriff auf die Objekte des in den Fign. 5a und 5b gezeigten Visualisierungsschaubildes ermöglicht wird. Wie in der Figur erkennbar, wird das Schlüsselwort "Object" durch "VisuObject Visuname Property" 37 ersetzt. Dies bedeutet, dass das Schlüsselwort "Object" durch den Textbaustein ersetzt wurde, der aus der Objektkategorie "Visuobject" und dem neuen Schlüsselwort "Visuname Property" besteht.

Als nächste Aufgabe muss demnach das neue Schlüsselwort 37 ersetzt werden, mit dem der Zugang zu den Eigenschaften der Visualisierungsobjekte 20, 21 ermöglicht wird. Durch Anwählen und Anklicken des Schlüsselwortes "Visuname Property" in der Zeile 37 öffnet sich die zugeordnete Auswahlliste 38, siehe Fig. 6b.

Der Umfang der Auswahlliste 38 ist von der Anzahl der angelegten Visualisierungsobjekte und der Anzahl der Eigenschaften der einzelnen Visualisierungsobjekte abhängig. Sobald ein weiteres Visualisierungsobjekt in einem Visualisierungsschaubild angelegt wird, erweitert das erfindungsgemäße System automatisch die Auswahlliste 38. Vorliegend ist die markierte Zeile "Switch/Status" der Auswahlliste 38 ausgewählt, was sich in der darunter stehenden Anweisungszeile niederschlägt, die noch keine ausführbare Anweisung darstellt, da sie weitere Schlüsselwörter aufweist.

Dem Anwender steht es in der beschriebenen Ausführungsform des erfindungsgemäßen Systems frei für jedes Visualisierungsobjekt zu bestimmen, welche Eigenschaften von Objekten oder eines bestimmten Objektes in den zugeordneten Auswahllisten auftreten sollen. Letztlich wird für alle auftretende Objekte, wie beispielsweise in Parameterschaubildern, Visualisierungsschaubildern, Druckobjekten, Variablen etc. zugeordnete Auswahllisten vom erfindungsgemäßen System automatisch erzeugt, sodass der Anwender bis auf die obenstehend angegebene Ausnahme keine eigenen diesbezüglichen Eingaben durchführen muss.

Indem in den Fig. 6a, b angegebenen Beispiel sind noch die verbleibenden Schlüsselworte 39 und 40 festzulegen, welche die logische Operation der Abfrage darstellen. Durch Anwahl des Schlüsselwortes 39 öffnet sich dessen Auswahlliste 41. Gewählt wird der logische Operator "=". Wie in der darunter stehenden Zeile ersichtlich, wird daraufhin das Schlüsselwort 39 durch das Gleichheitszeichen ersetzt. Nachfolgend wird das Schlüsselwort H/L 40 angewählt, sodass sich automatisch dessen Auswahlliste 42 öffnet. Die in der Liste 42 angegebenen Begriffe "open; yes; on; high" stellen Synonyme für eine logische 1 dar, während die Begriffe "close; no; off; low" Synonyme für eine logische 0 darstellen. Die weiteren Punkte der Auswahlliste 42 sind Objekte und Objekteigenschaften. Vorliegend wird in der Auswahlliste 42 "on" ausgewählt, was sich in der nun vollständigen und abarbeitbaren Anweisungszeile 43 niederschlägt. Diese Blockanweisung stellt somit das fertige Ergebnis innerhalb des erfindungsgemäßen Programmiersystems dar, das durch wenige Mausklicks erzeugt worden ist.

Auf die beschriebene Weise ist computergestützt jedes beliebige Programm für einen Anwender ohne besondere Kenntnisse erzeugbar.

### Bezugszeichenliste

- 1: Computer
- 1 a: Datenverarbeitungsmittel
- 1 b: Speichermittel
- 1 c: Eingabemittel
- 2: Parameterschaubild
- 3: Visualisierungsschaubild
- 4: Strukturschaubild
- 5: Druckerschnittstelle
- 6: Drucker
- 7: Umweltschnittstelle
- 8: Symbol des Startbausteins der Kategorie Ablauf
- 9: Symbol des Ablaufbausteins der Kategorie Ablauf
- 10: Symbol des Endbausteins der Kategorie Ablauf
- 11: Symbol des Ereignisbausteins der Kategorie Ablauf
- 12: Symbol des Funktionsbausteins der Kategorie Funktion
- 13: Symbol des Startbausteins der Kategorie Ablauf
- 14: Ablaufbaustein der Kategorie Ablauf
- 15: Ablaufbaustein der Kategorie Ablauf
- 16: Funktionsbaustein der Kategorie Funktion
- 17: Endbaustein der Kategorie Ablauf
- 18: Symbol eines Ereignisbausteins der Kategorie Ablauf
- 19: Symbol eines Endbausteins der Kategorie Ablauf
- 20: Schalterobjekt
- 21: Bildobjekt
- 22: Schalterobjekt
- 23: Bildobjekt
- 24: Scripteditor
- 31: Programmzeilen eines Ereignisbausteins
- 32: Programmzeile
- 33: Blockanweisung
- 34: Auswahlliste
- 35: Rohkörper einer Blockanweisung
- 36: Auswahlliste
- 37: Schlüsselwort
- 38: Auswahlliste
- 39: Schlüsselwort
- 40: Schlüsselwort
- 41: Auswahlliste
- 42: Auswahlliste
- 43: Programmanweisung

## Patentansprüche

1. Computergestütztes Verfahren zum Erstellen von Programmcode bei imperativen Sprachen, bei denen der Softwarecode in Prozeduren gekapselt sein kann, mit einer grafischen Benutzeroberfläche, (GUI, Graphical User Interface), **dadurch gekennzeichnet, dass** eine Programmanweisung eingefügt wird, die zumindest ein Schlüsselwort (37, 39, 40)) umfasst und dass bei Anwahl eines Schlüsselwortes (37, 39, 40) in einer eingefügten Programmanweisung (43) eine Auswahlliste (34, 36, 38, 41, 42) angezeigt wird, welche syntaxfehlerfreie Programmtextabschnitte umfasst, mit denen das Schlüsselwort ersetzbar ist und dass der Vorgang des Ersetzens von Schlüsselwörtern (37, 39, 40) in einer eingefügten Programmanweisung (43) solange fortgesetzt wird, bis alle Schlüsselwörter durch einen ausführbaren Programmanweisungsabschnitt ersetzt sind.

2. Computergestütztes Verfahren zum Erstellen von Programmcode bei imperativen Sprachen, bei denen der Softwarecode in Prozeduren gekapselt sein kann, mit einer grafischen Benutzeroberfläche, (GUI, Graphical User Interface), **dadurch gekennzeichnet, dass** eine noch nicht fertige Programmanweisung (35) eingefügt wird, die zumindest ein Schlüsselwort (44) umfasst und dass bei Anwahl eines Schlüsselwortes (44, 45, 46) in einer eingefügten Programmanweisung (35) eine Auswahlliste (36, 41, 42) angezeigt wird, welche syntaxfehlerfreie Programmtextabschnitte umfasst, mit denen das Schlüsselwort (44, 45, 46) ersetzbar ist und dass der Vorgang des Ersetzens von Schlüsselwörtern (44, 45, 46) in einer eingefügten Programmanweisung (35) solange fortgesetzt wird, bis alle Schlüsselwörter (44,45,46) durch einen ausführbaren Programmanweisungsabschnitt ersetzt sind.

3. Verfahren nach Anspruch 1 oder 2, **dadurch gekennzeichnet, dass** bei der Hinzufügung einer Programmanweisung zu dem Programmcodeabschnitt eines Programmbausteins eine Programmanweisung aus einer von zwei Programmanweisungskategorien (Aktion oder Abfrage) zur Auswahl mittels Auswahlliste (34) bereitgestellt wird, wobei nach Auswahl einer dieser beiden Kategorien die Programmanweisung als Aktions- (26) oder Abfrageanweisung (35) in Form einer Rohanweisung eingefügt wird, die Schlüsselworte enthält (35).

4. Verfahren nach Anspruch 1, 2 oder 3, **dadurch gekennzeichnet, dass** Schlüsselworte deutlich hervorgehoben sind, zum Beispiel durch Unterstreichen oder eine farbige Kennzeichnung.

5. Verfahren nach den vorhergehenden Ansprüchen, **dadurch gekennzeichnet, dass** die Auswahllisten von Aktionsanweisungen auch Programmanweisungen wie Zuweisungen, Schleifen oder Aufrufe umfassen, sodass das gesamte Programmierhandwerkzeug rechnergestützt und situationsabhängig dem Anwender bereitgestellt wird.

6. Verfahren nach den vorhergehenden Ansprüchen, **dadurch gekennzeichnet, dass** eine Fehlermeldung angezeigt wird, wenn versucht wird, den Programmcode ablaufen zu lassen, obwohl zumindest eines der Schlüsselwörter in einem der Programmabschnitte eines Programmbausteins noch nicht ersetzt worden ist.

7. Verfahren nach Anspruch 1 oder 2, **dadurch gekennzeichnet, dass** durch den Anwender angelegte Objekte, insbesondere Visualisierungsobjekte, Parameterobjekte, Variablen, Programmbausteine, automatisch in die jeweiligen Auswahllisten mit ihren individuellen Namen aufgenommen werden.

8. Verfahren nach Anspruch 1 und 7 oder 2 und 7, **dadurch gekennzeichnet, dass** mit Anlegung des Objektes festlegbar ist, welche Eigenschaften des Objektes in die Auswahllisten aufgenommen werden.

9. Verfahren nach Anspruch 8, **dadurch gekennzeichnet, dass** ein Expertenmodus vorgesehen ist, in welchem Auswahllisten bereitgestellt werden, die Zugriff auf alle Eigenschaften durch das zu erstellende Programm ermöglichen, wohingegen in einem Normalmodus der Zugriff auf die wichtigen Eigenschaften per Voreinstellung bereitgestellt wird, wobei diese Voreinstellungen der Anwender im erfindungsgemäßen System verändern kann.

10. System mit einer Ausführungsumgebung zum computergestützten Erstellen und/oder Abarbeiten von Programmcode (Softwarecode) umfassend zumindest eine Visualisierungsoberfläche zur Darstellung von Objekten, welche bei der Abarbeitung des Programmcodes Eingaben und Ausgaben von Information, insbesondere eine Dateneingabe und eine Datenausgabe bereitstellen, wobei erstellter Programmcode schreibend und lesend auf Objekte der Visualisierungsoberfläche zugreift, **dadurch gekennzeichnet, dass** eine Programmanweisung einer der beiden Programmanweisungskategorien Abfrage oder Aktion zugeordnet ist.

11. System nach Anspruch 10, **dadurch gekennzeichnet, dass** beim Anlegen einer neuen Programmanweisung nur eine der beiden Programmanweisungskategorien Abfrage oder Aktion auswählbar ist.

12. System nach einem der Ansprüche 10 oder 11, **dadurch gekennzeichnet, dass** eine auswählbare Programmanweisung zumindest ein Schlüsselwort enthält, das einen Platzhalter für zumindest ein weiteres Schlüsselwort und/oder einen Programmanweisungsabschnitt darstellt.

13. System nach Anspruch 10, **dadurch gekennzeichnet, dass** ein Schlüsselwort mit einer diesem zugeordneten Auswahlliste verknüpft ist, welche insbesondere gültige Programmtextabschnitte umfasst, mit denen das Schlüsselwort ersetzbar ist.

14. System nach Anspruch 10, **dadurch gekennzeichnet, dass** die Inhalte der einzelnen Positionen der jeweiligen Auswahlliste so gestaltet sind, dass nach dem Ersetzen des Schlüsselwortes durch eine der Position der Auswahlliste ein syntaxfehlerfreier Programmanweisungsabschnitt vorliegt.

15. System nach einem der Ansprüche 10 oder 11, **dadurch gekennzeichnet, dass** Programmanweisungen wie Zuweisungen, Schleifen, Aufrufe in den Auswahllisten enthalten sind.

16. Auf einem Speichermedium abgelegtes Computerprogrammprodukt, das in einen Speicher eines Computer geladen werden kann und das Softwarecodeabschnitte umfasst, mit denen ein Verfahren nach einem der Ansprüche 1 bis 9, insbesondere auf einem System nach einem der Ansprüche 10 bis 15 ausgeführt wird, wenn das Produkt auf dem Computer läuft.
